Europäisches Patentamt

European Patent Office

Office européen des brevets

(19)

(11) Numéro de publication : **0 155 874**
**B1**

(12) # FASCICULE DE BREVET EUROPÉEN

(45) Date de publication du fascicule du brevet :
07.06.89

(21) Numéro de dépôt : **85400331.6**

(22) Date de dépôt : **22.02.85**

(51) Int. Cl.⁴ : **B 60 P   3/32**, B 62 D 21/10,
B 32 B   3/04

(54) **Châssis-Plancher d'un nouveau type pour construction habitable principalement pour véhicule remorqué et procédé pour le fabriquer.**

(30) Priorité : 24.02.84 FR 8402851

(43) Date de publication de la demande :
25.09.85 Bulletin 85/39

(45) Mention de la délivrance du brevet :
07.06.89 Bulletin 89/23

(84) Etats contractants désignés :
AT BE CH DE GB IT LI LU NL SE

(56) Documents cités :
EP—A— 0 061 919
BE—A—   712 653
FR—A— 1 030 991
FR—A— 1 584 676
GB—A—   788 783

(73) Titulaire : **TRIGANO S.A.**
**100 rue Petit**
**F-75019 Paris (FR)**

(72) Inventeur : **Dilly, Jacques**
**Chemin des Grands Clos**
**F-02340 Montcornet (FR)**
Inventeur : **Motte, Patrice**
**1, rue de l'Etoile St-Michel**
**F-02500 Hirson (FR)**

(74) Mandataire : **Hasenrader, Hubert et al**
**Cabinet BEAU DE LOMENIE 55, rue d'Amsterdam**
**F-75008 Paris (FR)**

Jouve, 18, rue St-Denis, 75001 Paris, France

## Description

L'invention a pour objet un châssis-plancher de conception nouvelle, spécialement destiné aux constructions habitables, en particulier aux constructions déplaçables, aux constructions mobiles sur roues, principalement aux caravanes.

Sous son aspect le plus général, l'objet de l'invention résulte de l'intégration l'un à l'autre d'un châssis et d'un plancher, ce qui procure une plateforme possédant des qualités uniques : légèreté, rigidité, isolation thermique, planéité, surface résistante à aspect agréable, qui en font un élément de construction bien adapté comme plancher dans des constructions habitables de natures diverses où la réunion de ces qualités est fortement appréciée ; selon l'invention, des éléments de châssis sont disposés à l'intérieur du châssis-plancher.

Le châssis-plancher de l'invention convient particulièrement bien à la fabrication des caravanes et des véhicules habitables remorqués du même genre. On se référera donc, dans ce qui suit, à un exemple préféré de réalisation relatif à une caravane.

L'invention couvre aussi un procédé de fabrication de ce châssis-plancher.

Jusqu'à présent, les caravanes sont réalisées selon une technique courante en construction automobile selon laquelle on fabrique d'abord un châssis porteur rigide, composé de profilés assemblés mécaniquement ou soudés entre eux, protégé contre la rouille par divers moyens (galvanisation, projection de couche protectrice, ...). Ensuite, on réunit à ce châssis un plancher comprenant une ossature en bois contenant un isolant, sur les faces opposées de laquelle on fixe des feuilles de bois contreplaqué. A partir de ce plancher on édifie la carcasse de la carrosserie.

Les parois inférieure et supérieure sont réalisées à partir de matières en feuille de nature appropriée parmi lesquelles on peut citer : la tôle d'acier doux, la tôle d'aluminium, les plaques de polyester, etc.. Les parois sont minces en ce sens qu'elles ne sont pas assez épaisses pour ne pas fléchir sous leur propre poids en l'absence de la matière isolante de remplissage. Par exemple, pour les tôles métalliques l'épaisseur atteint au plus 1 mm environ ; pour le polyester ou une matière plastique analogue, elle atteint au plus 3 mm environ. L'emploi de feuilles ou de plaques plus épaisses n'est pas impossible dans le cadre de l'invention, mais n'apporte pas d'avantages supplémentaires tant que la matière isolante de remplissage suffit à leur donner la rigidité générale voulue.

La matière isolante préférée est la mousse de polyuréthane ayant une densité de 0,040 à 0,080, de préférence 0,06 environ. Une densité trop faible de la mousse risque de ne pas conduire à un maintien convenable des parois et d'obliger à recourir à des feuilles plus rigides, donc plus épaisses. Inversement, une densité plus forte diminue le pouvoir isolant, augmente le poids, et ne permet pas de réduire en conséquence l'épaisseur des parois qui doivent résister, de toute façon, aux efforts localisés et à l'usure.

De préférence, chaque paroi a un bord périmétrique plié à 90° environ, sur une hauteur égale à l'épaisseur du châssis-plancher et les bords pliés des deux parois se recouvrent mutuellement et sont fixés l'un à l'autre pour constituer la paroi latérale.

On connaît aussi par le document BE-A-712 653 une plaque sandwich servant de plancher pour roulotte ou caravane composé de deux couches de couverture en papier dur contenant un noyau de soutien en papier à configuration de nids d'abeilles ; un châssis auxiliaire est inclus partiellement dans cette plaque sandwich. Ce plancher a une faible épaisseur et il n'est pas conçu pour pouvoir contenir et abriter la totalité du châssis et d'autres éléments se fixant à ce dernier.

Le document GB-A-788 783 décrit une structure d'aile ou d'aileron pour aéronef composée d'une peau supérieure et d'une peau inférieure limitant un volume interne qui est cloisonné par des entretoises à profil en I dont les ailes sont mises en contact et fixées respectivement à la face interne de l'une et de l'autre peau. Des blocs de mousse partiellement durcie sont introduits entre les entretoises et leur durcissement total est réalisé par chauffage pendant que les deux peaux sont comprimées dans une presse.

L'invention a pour but principal de parvenir à un châssis-plancher intégré ayant les qualités citées plus haut, protégeant au maximum les éléments métalliques du châssis et particulièrement adapté à l'emploi de plancher pour construction habitable en raison de l'impression de confort qu'il procure.

Dans un châssis-plancher intégré pour construction habitable et déplaçable montée sur roues, tel que décrit dans le premier document précité, ayant une paroi supérieure mince, une paroi inférieure mince, une paroi latérale limitant un volume dans lequel sont disposés des éléments de châssis tels que des renforts, des entretoises et qui est rempli d'une matière isolante, selon l'invention lesdits éléments de châssis sont fixés à la face interne de la paroi inférieure et ont une hauteur inférieure à la hauteur intérieure finale du châssis-plancher cependant que la matière isolante est une mousse semi-rigide apte à tenir écartées les parois inférieure et supérieure.

De préférence, les éléments de châssis comprennent des entretoises longitudinales et transversales de hauteur suffisante à supporter la paroi supérieure à un niveau inférieur à celui de sa position finale plane en l'absence de la mousse isolante.

L'invention concerne aussi un procédé de fabrication du châssis-plancher intégré tel que défini dans la revendication 7 ; ce procédé est conçu pour rendre la fabrication aussi simple et aussi sûre que possible.

Selon ce procédé, on réalise séparément les deux parois en ménageant des entrées de canne d'injection dans l'une des parois et en faisant apparaître sur chacun un bord périmétrique plié, on fixe des renforts métalliques locaux à la face interne de la paroi inférieure au moins, on fixe aussi à l'une des deux parois et de préférence, à la paroi inférieure des entretoises internes d'écartement de hauteur inférieure à l'épaisseur du plancher-châssis, on pose une paroi sur l'autre en faisant se recouvrir les bords pliés, on fixe ensemble ces bords pliés et on obtient ainsi une enveloppe vide que l'on place dans un berceau de soutien ; on maintient le tout sous un plateau d'une presse, on introduit les cannes d'injection par les entrées et on injecte un produit générateur de mousse à l'intérieur en retirant progressivement les cannes d'injection. Après stabilisation de la mousse, on retire le châssis-plancher de la presse et du berceau de soutien.

A ce châssis-plancher ainsi réalisé, on fixe l'essieu, le timon et tous autres éléments utiles, aux renforts préalablement prévus à cet effet, et on monte la carrosserie directement sur ce châssis-plancher.

Un avantage important apporté par l'invention est que l'on peut choisir pour constituer les parois des feuilles de matière particulièrement appropriée à l'usage, comme le polyester résistant et incorrodable pour la paroi inférieure, ou des feuilles déjà traitées superficiellement comme les tôles zinguées, laquées, etc... ou pourvues d'un revêtement de surface, tel qu'un revêtement de sol, pour la paroi supérieure.

On donnera maintenant, sans intention limitative et sans exclure aucune variante une description d'un exemple de réalisation. On se reportera aux dessins annexés dans lesquels :

— la figure 1 est une vue générale en élévation en coupe par un plan vertical longitudinal d'une enveloppe réalisée conformément à l'invention, avant injection de la mousse isolante,

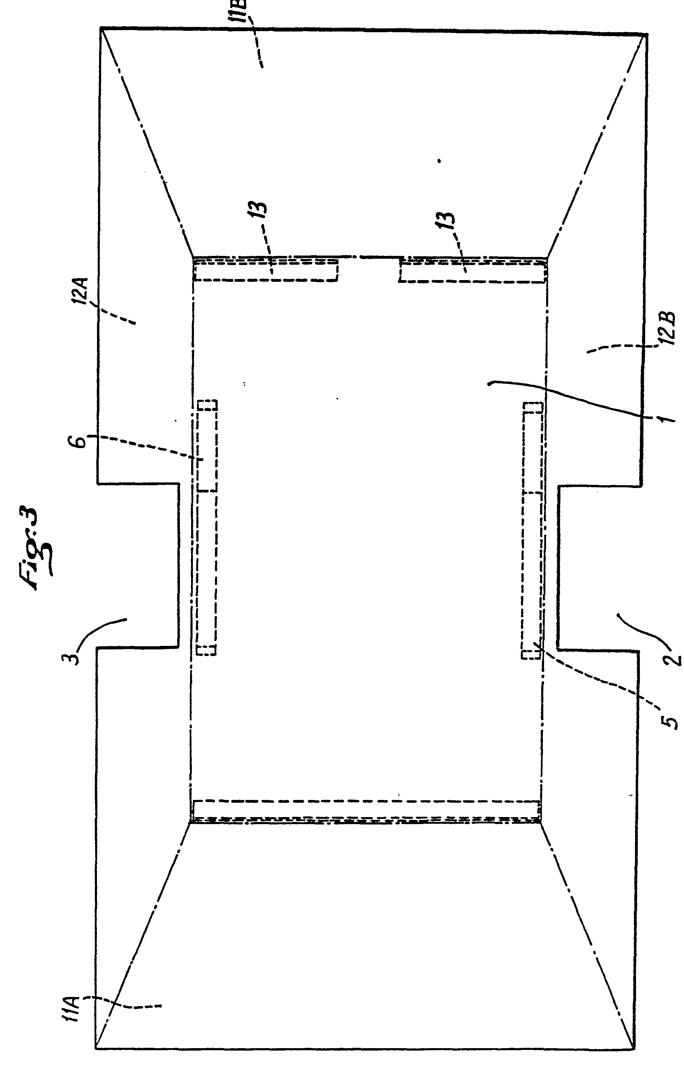

— la figure 2 est une vue partielle agrandie d'une partie extrême de l'enveloppe de la figure 1, après injection de la mousse isolante,

— la figure 3 est une vue de dessus du châssis-plancher terminé conforme à l'invention,

— la figure 4 est une vue de dessus analogue à la figure 3 montrant le châssis-plancher muni d'un essieu et d'un timon.

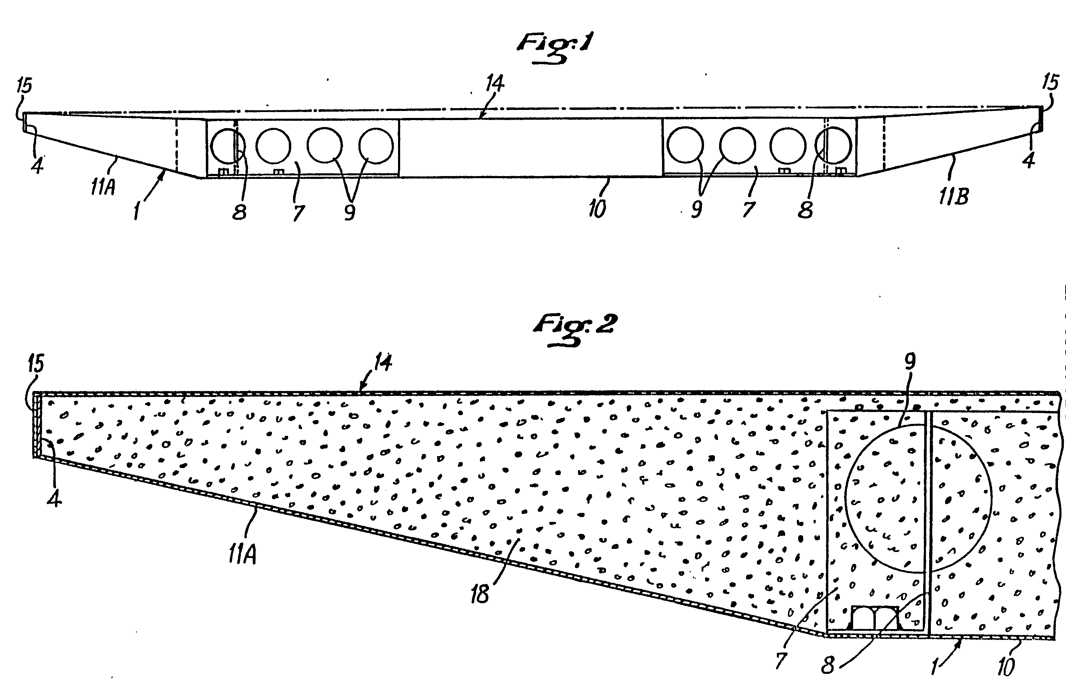

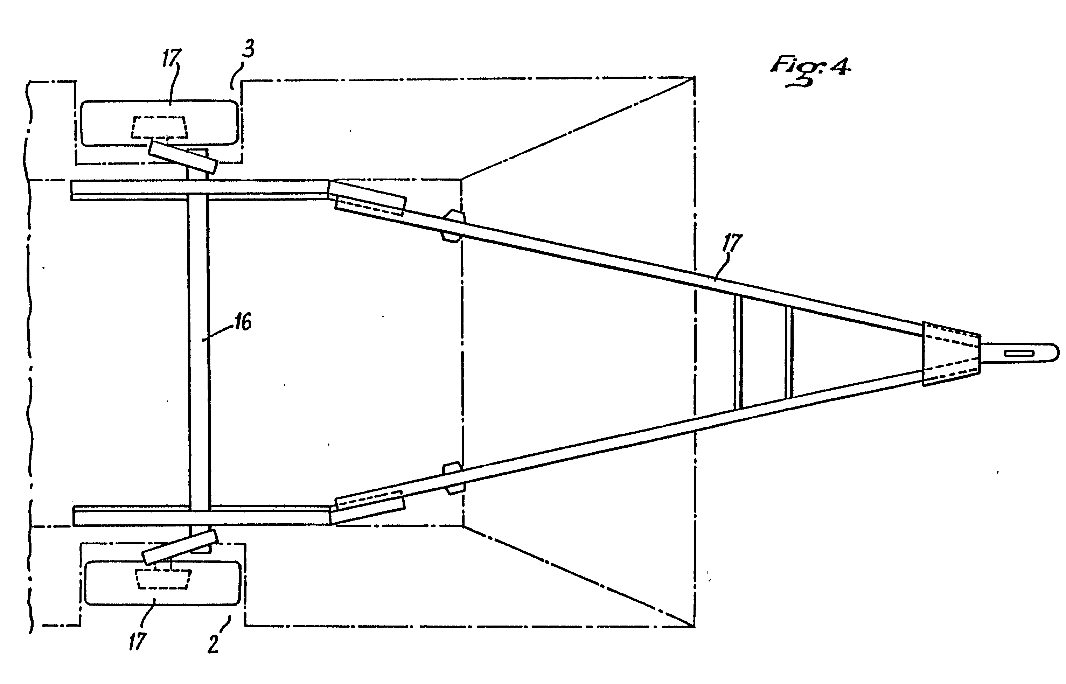

En se reportant d'abord à la figure 1, on peut voir une paroi inférieure 1 réalisée par exemple en tôle d'acier électrozinguée d'une épaisseur de 0,5 mm, ou en tôle d'aluminium de 0,8 mm d'épaisseur, ou encore en polyester de 2,5 mm d'épaisseur. Cette paroi est fabriquée aux dimensions totales du châssis-plancher désiré, comme le montre la figure 3. Sur celle-ci le châssis-plancher représenté a une longueur de 4 m et une largeur de 2,100 m, avec deux échancrures 2, 3 ménagées dans les côtés longitudinaux, pour servir au passage des roues, comme on le voit sur la figure 4. Avec certaines matières comme le polyester, il est possible de fabriquer la paroi inférieure 1 en un morceau d'un seul tenant ;

quand il s'agit de tôles ayant des dimensions unitaires trop faibles, on les assemble par leurs bords, en quantité voulue, selon des méthodes connues. Sur tout son périmètre, la paroi inférieure 1 a son bord 4 plié vers le haut, en direction de la paroi supérieure 14.

En construisant cette paroi inférieure 1, on fixe à sa face interne des renforts 5, 6 à l'aide de boulons, ou par soudure, aux emplacements voulus pour la mise en place ultérieure de divers éléments mécaniques (essieu, timon, béquilles ou vérins, etc...). On fixe aussi à cette face interne des entretoises d'écartement 7, 8 dont la hauteur est au plus égale, et de préférence inférieure, à la hauteur intérieure finale du châssis-plancher. Les entretoises 7 sont disposées longitudinalement sur une fraction de la longueur totale, par exemple un cinquième, en deux tronçons espacés dans le sens de la longueur. Les entretoises 8 sont disposées transversalement ; elles croisent les entretoises longitudinales 7. Cette disposition n'est donnée qu'à titre d'exemple ; beaucoup d'autres dispositions sont possibles pour que les entretoises d'écartement 7, 8 jouent leur rôle qui sera expliqué plus loin. Dans toutes les entretoises 7, 8 sont découpées de larges ouvertures 9.

Une paroi aussi mince en épaisseur d'aussi grandes dimensions en surface, ne se supporte pas d'elle-même. On doit donc la soutenir, soit pendant, soit après sa fabrication, au moyen d'un berceau dans lequel elle repose. Cette paroi inférieure 1 pourrait être plane, ce qui conduirait à un châssis-plancher d'épaisseur constante sur toute sa surface. Il est possible aussi, comme on le montre dans le présent exemple, de prévoir une zone centrale plane 10 et des parties extrêmes longitudinales 11A, 11B et latérales 12A, 12B à épaisseur progressivement décroissante jusqu'à la dimension prévue pour la paroi latérale 4, à la façon d'un solide d'égale résistance. On obtient donc autour de la zone centrale plane 10 des parties extrêmes qui s'amincissent. Les entretoises d'écartement 7, 8 sont placées de préférence dans la zone centrale plane 10, avant que commencent les parties extrêmes à épaisseur décroissante. On ménage aussi dans la zone centrale plane 10 des ouvertures 13 (figure 3) permettant l'introduction de cannes d'injection d'un produit générateur de mousse.

On fabrique la paroi supérieure 14 de la même façon que la paroi inférieure 1, à partir des mêmes matières en feuille ou en plaque mais il est préférable d'employer des feuilles ou des plaques dont la face extérieure, qui deviendra la face supérieure du châssis-plancher, est appropriée à sa fonction dans la caravane terminée. Par exemple, cette face peut être recouverte préalablement d'un revêtement de sol ; il reste possible cependant de mettre en place ce revêtement après la confection du châssis-plancher. On rabat le bord périmétrique de la paroi supérieure 14 en le pliant à 90° pour faire apparaître une paroi latérale 15 destinée à recouvrir la paroi latérale 4 de la paroi inférieure 1. On pourrait envisager de ne faire apparaître qu'un bord plié sur une seule paroi mais la réalisation serait moins facile et la paroi latérale serait moins rigide.

Quand la paroi supérieure 14 est terminée, on la dépose sur la paroi inférieure 1 reposant elle-même dans son berceau. La paroi latérale 15 recouvre et contient la paroi latérale 4 et on fixe ensemble ces deux parois sur tout le périmètre, soit par des rivets, soit par points de soudure, soit à l'aide d'une matière adhésive, etc...

Dans cet état, la paroi supérieure 1 ne se soutient pas d'elle-même ; elle s'affaisse comme on l'a indiqué en trait plein sur la figure 1, par rapport à sa position finale plane dessinée en trait mixte, jusqu'à ce qu'elle soit soutenue par les entretoises d'écartement 7, 8.

On obtient ainsi une enveloppe vide que l'on place avec le berceau dans lequel elle repose, dans une presse ayant un plateau supérieur que l'on fait descendre jusqu'à ce que sa face inférieure se trouve dans le plan dessiné en trait mixte sur la figure 1 qui doit être celui de la face supérieure du châssis-plancher.

On introduit des cannes d'injection par les ouvertures 13 et on les retire à mesure que la mousse se forme. Celle-ci occupe tout le volume en passant par les ouvertures 9 des entretoises d'écartement 7, 8. En se gonflant, elle repousse la paroi supérieure 14 contre le plateau de la presse, à sa position définitive.

Après stabilisation de la mousse on fixe au châssis-plancher obtenu un essieu 16 muni de roues 17 qui entrent dans les échancrures 2, 3, un timon 17 et d'autres accessoires mécaniques, en utilisant les renforts 5, 6 prévus à cet usage. On pourrait prévoir également, si on le jugeait utile, des renforts sur la face interne de la paroi supérieure 14 pour la fixation d'éléments de la carrosserie ou de l'équipement intérieur.

La mousse 18 maintient les parois inférieure 1 et supérieure 14 à l'écartement voulu, donne de la rigidité à l'enveloppe et assure l'isolation thermique. On utilise de préférence une mousse de polyuréthane semi-rigide d'une densité de 0,060. On peut, bien entendu, apporter des variations au sujet de la nature de la mousse et de sa densité, en particulier selon la rigidité, c'est-à-dire l'épaisseur retenue pour la fabrication des parois supérieure et inférieure, ainsi qu'on l'a déjà expliqué précédemment.

Un châssis-plancher réalisé comme on vient de le décrire à l'aide de tôles d'aluminium ayant une épaisseur de 0,8 mm, et de mousse de polyuréthane d'une densité de 0,060, a un poids de 81 kg alors que la construction classique d'un châssis supportant un plancher a un poids de 121 kg, pour des dimensions identiques en largeur et en longueur. En outre, l'isolation thermique et la résistance à la corrosion du châssis-plancher de l'invention sont bien supérieures à celles de la réalisation classique. On notera aussi que la face inférieure du châssis-plancher est lisse et continue, ce qui est favorable à l'écoulement de l'air, alors qu'un châssis classique provoque des remous d'air nuisibles pendant le déplacement de la caravane sur les routes.

## Revendications

1. Châssis-plancher intégré de construction habitable et déplaçable montée sur roues, ayant une paroi supérieure mince (14), une paroi inférieure mince (1), une paroi latérale (4, 15) limitant un volume dans lequel sont disposés des éléments de châssis tels que des renforts (5, 6), des entretoises (7, 8) et qui est rempli d'une matière isolante (18), caractérisé en ce que lesdits éléments de châssis (5, 6, 7, 8) sont fixés à la face interne de la paroi inférieure (1) et ont une hauteur inférieure à la hauteur intérieure finale du châssis-plancher cependant que la matière isolante (18) est une mousse semi-rigide apte à tenir écartées les parois inférieure (1) et supérieure (14).

2. Châssis-plancher selon la revendication 1 caractérisé en ce que lesdits éléments de châssis comprennent des entretoises longitudinales (7) et transversales (8) de hauteur suffisante à supporter la paroi supérieure (14) à un niveau inférieur à celui de sa position finale plane en l'absence de la mousse isolante (18).

3. Châssis-plancher selon la revendication 1 caractérisé en ce que la mousse isolante (18) a une densité comprise entre 0,040 et 0,080, de préférence 0,060.

4. Châssis-plancher selon la revendication 1 caractérisé en ce que les parois supérieure (14) et inférieure (1) ont une épaisseur atteignant au plus 1 mm environ, quand elles sont métalliques et 3 mm environ quand elles sont en matière plastique.

5. Châssis-plancher selon la revendication 1 caractérisé en ce que la paroi latérale (4, 15) est constituée par les bords périmétriques pliés et se recouvrant l'un l'autre de la paroi supérieure (14) et de la paroi inférieure (1), ces deux bords étant solidement fixés l'un à l'autre.

6. Châssis-plancher selon la revendication 4 caractérisé en ce que les parois supérieure (14) et inférieure (1) sont réalisées à partir de tôles d'acier doux d'une épaisseur de 0,5 mm environ, de tôles d'aluminium d'une épaisseur de 0,8 mm environ, de plaques de polyester d'une épaisseur de 2,5 mm environ.

7. Procédé pour la fabrication d'un châssis-plancher selon l'une quelconque des revendications 1 à 6 caractérisé en ce que :

— on réalise séparément la paroi supérieure (14) et la paroi inférieure (1) en ménageant des ouvertures (13) d'entrée de canne d'injection dans l'une de ces parois et en faisant apparaître un bord périmétrique plié (4, 15) sur l'une au moins de ces parois,

— on fixe des renforts rigides (5, 6) au moins à la face interne de la paroi inférieure,

— on fixe à la face interne de l'une des parois, de préférence la paroi inférieure, des entretoises (7, 8) d'écartement de hauteur inférieure à l'épaisseur du châssis-plancher,

— on pose la paroi supérieure en la laissant reposer sur les entretoises d'écartement et on la fixe à la paroi inférieure à l'aide du bord périmétrique plié,

— on place l'enveloppe vide ainsi obtenue sur un berceau de soutien et on met le tout sous un plateau de presse, puis on introduit les cannes d'injection et on injecte un produit générateur de mousse en retirant progressivement les cannes d'injection,

— après stabilisation de la mousse, on relève la presse puis on retire le châssis-plancher du berceau de soutien.

8. Procédé selon la revendication 7 caractérisé en ce qu'on fait apparaître un bord périmétrique plié (15, 4) sur chacune des parois supérieure (14) et inférieure (1), on fait recouvrir un bord périmétrique plié par l'autre bord périmétrique plié quand on pose la paroi supérieure sur la paroi inférieure et on fixe ensemble ces deux bords (15, 4) pour obtenir une paroi latérale rigide.

## Claims

1. An integrated platform-frame of habitable and movable construction mounted on wheels, having an upper thin wall (14), a lower thin wall (1) and a sidewall (4, 15) bounding a volume in which are arranged frame members such as reinforcements (5, 6) and crosspieces (7, 8) and which is filled with insulating matter (18), characterised in that the said frame members (5, 6, 7, 8) are attached to the inner face of the lower wall (1) and have a height less than the final inner height of the platform-frame whilst the insulating matter (18) is a semirigid foam fit for holding apart the lower wall (1) and upper wall (14).

2. A platform-frame as in Claim 1, characterised in that the said frame members comprise longitudinal (7) and transverse (8) crosspieces of sufficient height to support the upper wall (14) at a level lower than that of its final plane position in the absence of the insulating foam (18).

3. A platform-frame as in Claim 1, characterised in that the insulating foam has a density lying between 0.040 and 0.080, preferably 0.060.

4. A platform-frame as in Claim 1, characterised in that the upper wall (14) and lower wall (1) have a thickness reaching at most about 1 mm when they are metallic and about 3 mm when they are of plastics matter.

5. A platform-frame as in Claim 1, characterised in that the sidewall (4, 15) is formed by the peripheral edges of the upper wall (14) and lower wall (1) folded to overlap one another, these two edges being rigidly fixed to one another.

6. A platform-frame as in Claim 4, characterised in that the upper wall (14) and lower wall (1) are produced from mild steel sheet of a thickness of about 0.5 mm, aluminium sheet of a thickness of about 0.8 mm or polyester panels of a thickness of about 2.5 mm.

7. A method of manufacture of a platform-frame as in any one of the Claims 1 to 6, characterised in that :

— the upper wall (14) and lower wall (1) are produced separately, openings (13) being cut in one of these walls for admitting an injection cane and a folded peripheral edge (4, 15) being caused to appear on at least one of these walls ;

— rigid reinforcements (5, 6) are fixed to at least the inner face of the lower wall ;

— to the inner face of one of the walls, preferably the lower wall, spacer crosspieces (7, 8) are fixed, of height less than the thickness of the platform frame ;

— the upper wall is placed by letting it rest on the spacer crosspieces and it is fixed to the lower wall by means of the folded peripheral edge ;

— the empty envelope thus obtained is placed upon a supporting cradle and the whole is put under a press platen, then the injection canes are introduced and a foam-generative product is injected whilst progressively withdrawing the injection canes ;

— after the foam has become rigid the press is removed and then the platform-frame is withdrawn from the supporting cradle.

8. A method as in Claim 7, characterised in that a folded peripheral edge (15, 4) is caused to appear on each of the walls, upper (14) and lower (1), one folded peripheral edge is made to overlap the other folded peripheral edge when the upper wall is placed over the lower wall and these two edges (15, 4) are fixed to one another in order to obtain one rigid sidewall.

## Patentansprüche

1. Chassis mit fest eingebauter Bodenfläche, welches für einen Wohnaufbau geeignet und auf Rädern beweglich montiert ist, mit einer dünnen oberen Wand (14), einer dünnen unteren Wand (1) und einer Seitenwand (4, 15), die ein Volumen begrenzen, in dem die Chassiselemente, wie Versteifungen (5, 6) und Zwischenstücke (7, 8) angeordnet sind und das mit ein Isolierstoff (18) gefüllt ist, dadurch gekennzeichnet dass die Chassiselemente (5, 6, 7, 8) an der Innenseite der unteren Wand (1) befestigt sind und deren Höhe kleiner ist als die Innen-Fertighöhe des Chassis mit fest eingebauter Bodenfläche wobei der Isolierstoff ein halbstarrer Isolierschaum ist, welcher die obere Wand (14) und die untere Wand (1) in Abstand Voneinander zu halten befähigt ist.

2. Chassis mit fest eingebauter Bodenfläche nach Anspruch 1, dadurch gekennzeichnet, dass die Chassiselemente längsliegende Zwischenstücke (7) und querliegende Zwischenstücke (8) umfassen, die eine genügend Höhe haben um die obere Wand (14) an einen Spiegel unterer als seine endliche ebene Stellung im Entfernung der Isolierschaum (18) zu stützen.

3. Chassis mit fest eingebauter Bodenfläche nach Anspruch 1, dadurch gekennzeichnet, dass der Isolierschaum (18) eine Dichte zwischen 0,040 und 0,080, vorzugsweise 0,060, hat.

4. Chassis mit fest eingebauter Bodenfläche nach Anspruch 1, dadurch gekennzeichnet, dass die obere Wand (14) und die untere Wand (1) eine Dicke aufweisen, die etwa 1 mm bei Metall und etwa 3 mm bei Kunststoff beträgt.

5. Chassis mit fest eingebauter Bodenfläche nach Anspruch 1, dadurch gekennzeichnet, dass die seitliche Wand (4, 15) durch umfangsseitige, umgebogene Randabschnitte der oberen Wand (14) und der unteren Wand (1) besteht, die sich gegenseitig überdecken und die fest miteinander verbunden sind.

6. Chassis mit fest eingebauter Bodenfläche nach Anspruch 4, dadurch gekennzeichnet, dass die obere Wand (14) und die untere Wand (1) ausgehend von Blechen aus Flussstahl aufgebaut sind, die eine Stärke von ungefähr 0,5 mm aufweisen oder von Aluminiumblechen mit einer Stärke von ungefähr 0,8 mm oder Polyesterplatten mit einer Stärke von ungefähr 2,5 mm.

7. Verfahren zur Herstellung eines Chassis mit fest eingebauter Bodenfläche nach einem der Ansprüche 1 bis 6, dadurch gekennzeichnet,

dass man getrennt die obere Wand (14) und die untere Wand (1) herstellt, wobei Eintrittsöffnungen (13) für den Injektionskanal in einer dieser Wände vorgesehen werden und mindestens bei einer dieser Wände ein umgebogener, umfangsseitiger Randabschnitt (4, 15) ausgebildet wird,

dass man starre Versteifungen (5, 6) zumindest an der Innenseite der unteren Wand befestigt,

dass man an der Innenseite einer der Wände, vorzugsweise der unteren Wand, Zwischenstücke (7, 8) zur Abstandshaltung befestigt, die eine Höhe kleiner als die Dicke des Chassis mit fest eingebauter Bodenfläche haben,

dass man die obere Wand auf die Zwischenstücke aufsetzt und die mit Hilfe des aufgerichteten Randabschnittes an den unteren Wand befestigt,

dass man die derart erhaltene Umhüllung auf eine Haltebühne bringt und das Ganze unter einen Teller einer Presse stellt, anschliessend die Injektionskanäle einführt und einen schaumerzeugenden Stoff injiziert, wobei fortlaufend die Injektionskanäle zurückgezogen werden, und

dass nach Stabilisierung des Schaums das Teller erheben wird und das Chassis mit fest eingebauter Bodenfläche von der Haltebühne abgenommen wird.

8. Verfahren nach Anspruch 9, dadurch gekennzeichnet, dass ein umgebogener Randabschnitt (15, 4) an jedem der oberen (14) und unteren (1) Wände hergestellt wird, und dass man den einen umfangsseitigen umgebogenen Randabschnitt mit dem anderen umgebogenen Randabschnitt abdeckt, wenn die obere Wand auf die untere Wand aufgelegt wird, und dass man die beiden Randabschnitte (15, 4) aneinander befestigt, um eine starre Seitenwand zu erhalten.

*Fig.1*

*Fig.2*

EP 0 155 874 B1

_Fig.3_

Fig. 4